# FASCICULE DE BREVET EUROPEEN

(11) **EP 4 373 742 B1**
(45) Date de publication et mention de la délivrance du brevet: **01.07.2026**
(21) Numéro de dépôt: 22758560.1
(22) Date de dépôt: 21.07.2022
(51) Int. Cl.: B64B 1/06, B64B 1/28, B64D 27/34, B64D 27/355

(54) **DIRIGEABLE DE STRUCTURE RIGIDE A PROPULSION ELECTRIQUE ET NACELLE DE PRODUCTION D'ENERGIE ELECTRIQUE EQUIPANT CE DIRIGEABLE**
ELEKTRISCH ANGETRIEBENES LUFTSCHIFF MIT STARRER STRUKTUR UND STROMERZEUGENDE GONDEL ZUR AUSRÜSTUNG DIESES LUFTSCHIFFS
ELECTRICALLY POWERED, RIGID-STRUCTURE AIRSHIP AND ELECTRIC-POWER-GENERATING NACELLE EQUIPPING SAID AIRSHIP

(30) Priorité: 21.07.2021 FR 2107881
(43) Date de publication de la demande: 29.05.2024
(73) Titulaire: Flying Whales, 92150 Suresnes (FR)
(72) Inventeur: TAILLARDAT, Clémence, 92150 SURESNES (FR); GUILLOU, Pierrot, 92150 SURESNES (FR)
(74) Mandataire: IP Trust
(86) Numéro de dépôt international: PCT/FR2022/051455
(87) Numéro de publication internationale: WO 2023/002134

(56) Documents cités:
- WO-A1-2020/159402
- DE-U1- 202018 003 924
- JP-A- 2005 053 353
- US-A- 5 368 256
- US-A1- 2018 022 461
- US-A1- 2018 319 476

## Description

### DOMAINE DE L'INVENTION

Le domaine de l'invention est celui de dirigeables de structure rigide à propulsion électrique, conçus pour le transport de charges lourdes, et plus particulièrement celui de la structure mécanique de nacelles de production d'énergie électrique équipant ces dirigeables.

### ETAT DE LA TECHNIQUE

Pour l'alimentation en énergie électrique de dirigeables à propulsion électrique, plusieurs voies technologiques peuvent être envisagées parmi lesquelles l'utilisation d'un turbogénérateur ou d'une pile à combustible, cf. JP 2005 053353 A.

Pour l'une ou l'autre de ces voies technologiques visant à procurer un système embarqué de génération électrique, se pose la question de la sécurité du dirigeable dans le cas d'une défaillance du système de génération électrique. En particulier, dans le cas de l'utilisation d'un turbogénérateur, une défaillance mécanique de l'arbre de la turbine peut entraîner la projection à grande vitesse de pièces mécaniques qui peuvent heurter le corps principal du dirigeable et le mettre en situation de péril. Il faut également prendre en compte le risque feu induit par le fonctionnement d'un turbogénérateur en cas de risque de fuite de carburant. De même dans l'utilisation d'une pile à combustible, il existe des risques technologiques dus à la présence de gaz hydrogène.

Pour ces raisons, il est généralement prévu de disposer ces systèmes de génération électrique - qui peuvent être de forte puissance - à l'extérieur du corps principal du dirigeable. On limite ainsi les risques de propagation d'un feu naissant au niveau d'un turbogénérateur ou de destruction de la structure mécanique du dirigeable du fait d'une projection de pièces mécaniques. Il existe déjà des architectures de dirigeable comportant des nacelles intégrant des systèmes d'énergie électrique et reliées mécaniquement au corps du dirigeable.

Toutefois, dans certaines configurations de liaison de ces nacelles au corps du dirigeable, il peut être très difficile d'intervenir sur les systèmes de génération électrique intégrés dans ces nacelles. En particulier, dans des dirigeables de grande dimension, l'accès aux systèmes de génération électrique peut devenir critique.

Un objectif de la présente invention est de remédier à ces inconvénients en proposant une nouvelle structure de nacelle adaptée pour un accès aisé aux systèmes embarqués de génération électrique.

### EXPOSE DE L'INVENTION

Suivant un aspect de l'invention, il est proposé une nacelle selon la revendication 1.

Selon un autre aspect, il est proposé un dirigeable comportant un corps principal ayant une structure rigide entourant une pluralité de conteneurs d'un gaz plus léger que l'air, une pluralité de groupes propulseurs reliés mécaniquement à cette structure rigide et comportant chacun un ou plusieurs moteurs électriques d'entraînement d'une hélice propulsive, et une ou plusieurs unités de génération d'énergie électrique prévues pour alimenter ledit un ou plusieurs moteurs électriques, comprenant en outre deux nacelles selon la revendication 1, disposées symétriquement de part et d'autre du corps principal.

La structure mécanique de nacelle peut être avantageusement réalisée sous la forme d'un treillis de poutres/tubes composites. Mais on peut aussi envisager pour la réalisation de cette structure mécanique l'utilisation de bien d'autres matériaux et techniques dès lors que celles-ci sont compatibles avec les standards de sécurité en matière de feu et avec la classification zonale. On peut ainsi envisager l'utilisation de lisses, cadres ou peaux rivetées. On peut aussi prévoir une structure de nacelle réalisée par moulage. Par ailleurs, des protections thermiques peuvent être prévues pour des parties de la structure mécanique de nacelle qui présentent un risque d'exposition au feu. Chaque nacelle peut en outre comprendre des moyens de treuil pour contrôler la descente d'une unité de génération d'énergie électrique, lesdits moyens de treuil étant fixés à la partie supérieure de la structure de nacelle. On peut aussi prévoir l'utilisation d'équipements de support au sol (GSE : « ground Support Equipements ») pour la dépose des unités de génération d'énergie électrique.

La partie inférieure de la structure de nacelle peut avantageusement comporter un plancher entourant la ou les unités de génération électrique installées dans la nacelle et un chemin communicant avec le corps principal du dirigeable, ce plancher étant configuré pour permettre de descendre tout ou partie d'une unité de génération d'énergie électrique hors de la nacelle.

Au moins une nacelle peut en outre comprendre au moins un capotage d'une unité de génération d'énergie électrique, ce capotage s'étendant vers le bas à l'extérieur de l'enveloppe de carénage et comportant un volet d'accès à l'unité de génération d'énergie électrique.

La ou les unités de génération d'énergie électrique peuvent comprendre au moins un turbogénérateur ou au moins un système de pile à combustible.

### BREVE DESCRIPTION DES FIGURES

La figure 1 représente une vue latérale d'un exemple de réalisation d'un dirigeable équipé de deux nacelles de production d'énergie électrique.
La figure 2 illustre un exemple de couplage mécanique d'une nacelle à la structure rigide d'un dirigeable selon l'invention.
La figure 3 illustre un exemple de réalisation d'une enveloppe d'une nacelle de production d'énergie électrique selon l'invention.
La figure 4 illustre une structure mécanique d'une nacelle de production d'énergie électrique selon l'invention.
La figure 5 illustre une implantation de la structure mécanique de la nacelle par rapport à celle du dirigeable.
La figure 6 est une vue en perspective d'un mode de cheminement entre l'intérieur du dirigeable et une nacelle selon l'invention.
La figure 7 illustre un exemple d'accès d'un opérateur dans une nacelle selon l'invention.
La figure 8 illustre plusieurs scénarios d'extraction/dépose de composants d'un système de génération électrique au sein d'une nacelle selon l'invention.
La Figure 9 illustre une première configuration schématique d'une nacelle dont l'enveloppe inclut les systèmes de génération électrique.
La Figure 10 illustre une seconde configuration schématique d'une nacelle dont l'enveloppe ne couvre que partiellement les systèmes de génération électrique.

### DESCRIPTION DETAILLEE

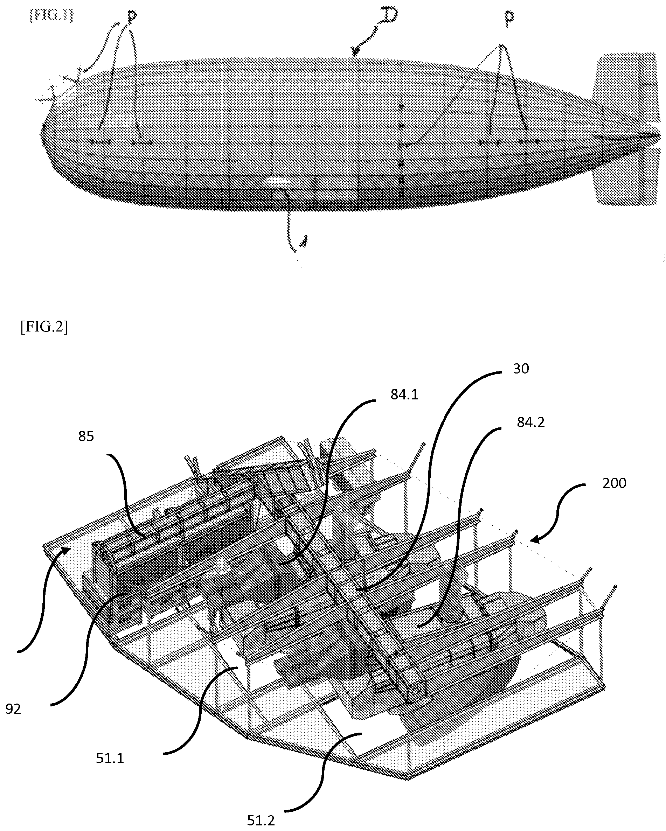

En référence à la figure 1, un dirigeable de structure rigide D comporte un ensemble de groupes propulseurs P alimentés en énergie électrique à partir de systèmes de production d'énergie électrique intégrés dans deux nacelles externes 1, par exemple en forme de nageoire (dont une seule est représentée sur la figure 1).

Une nacelle 1 comprend une structure mécanique 300 réalisée à partir de treillis de poutres en matériau composite et recouverte d'une peau de coque ou de carénage 10. Cette structure mécanique 300 comprend une partie 30 de liaison entre une partie supérieure 31 prévue pour porter deux turbogénérateurs 84.1,84.2 et une partie inférieure 9.

La partie supérieure 31 de la structure mécanique est reliée à un cadre 4 du corps principal du dirigeable via une interface mécanique 3 et trois câbles 7,70,71.

La nacelle 1 intègre deux groupes turbogénérateurs 84.1,84.2 montés suspendus à la partie supérieure 31 de la structure mécanique de la nacelle 1, un système de batteries de stockage 85, et un plancher 5.

Ce plancher 5 comprend une voie d'accès 50 depuis l'intérieur du dirigeable D dans la nacelle 1, et une partie de plancher 52 entourant les deux turbogénérateurs 84.1,84.2. Des parties évidées 51.1,51.2 sont ménagées dans le plancher 5 pour permettre une extraction et une dépose des turbogénérateurs au moyen de treuils (non représentés) prévus sur la partie supérieure 31 de la structure mécanique.

Les deux turbogénérateurs 84.1,84.2 sont reliés en sortie à un système de conversion d'énergie 85 à un système de batteries de stockage 92 qui sont reliés à un système de distribution électrique au sein du dirigeable.

Cette nacelle est outre pourvue d'un système de gestion thermique conçu pour refroidir les turbogénérateurs, et ventiler les enceintes de confinement contenant ces turbogénérateurs, refroidir les systèmes de conversion d'énergie et de batteries de stockage. La peau de la nacelle devra ainsi accueillir l'ensemble des interfaces des systèmes internes à la nacelle avec l'extérieur, notamment des conduits d'entrée d'air, des conduits d'évacuation de gaz ou des drains.

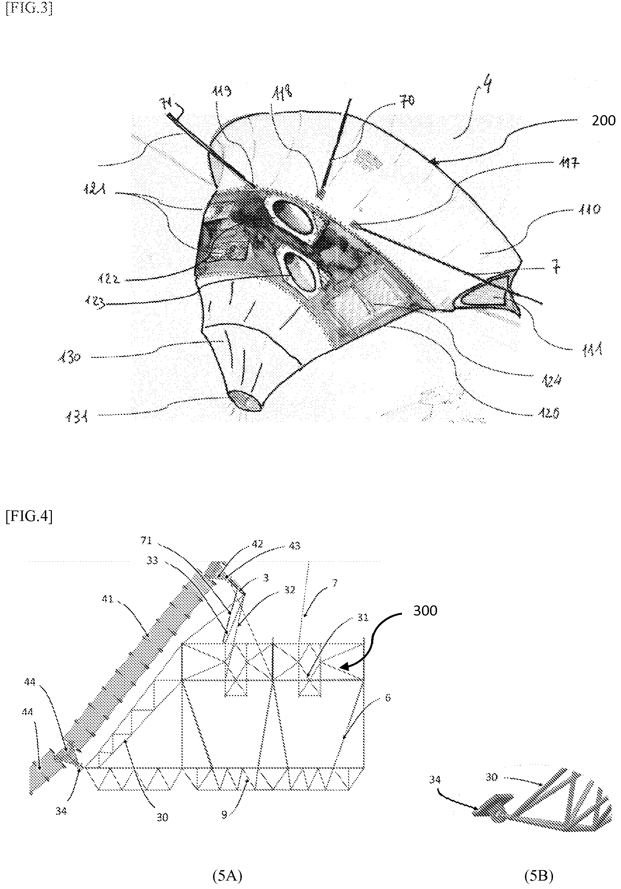

Dans un exemple pratique de réalisation d'une nacelle illustrée par la figure 3, l'enveloppe de nacelle 200 comprend une partie de peau semi-rigide 110 disposée contre la structure mécanique 4 du dirigeable, une partie de peau rigide 120 couvrant sensiblement les turbogénérateurs et une partie de peau souple 130 couvrant l'extrémité distale de la nacelle, cette extrémité distale étant pourvue d'un dispositif lumineux de position 131.

La partie de peau rigide 120, réalisée par exemple à partir d'un matériau composite, comporte des ouvertures 121 pour recevoir des conduits d'entrée d'air destinés à la ventilation de la nacelle, des ouvertures 123 pour recevoir des conduits d'évacuation des gaz de combustion des turbogénérateurs, et des ouvertures 124 pour recevoir des grilles de sortie de ventilation de la nacelle.

La partie de peau semi-rigide 110, réalisée par exemple dans un matériau de type polymère pour filet, comprend une grille d'évacuation 111 du refroidissement d'un système de batteries intégré dans la nacelle, et des ouvertures 117,118,119 prévues pour laisser passer les câbles de hauban 7,70,71 reliant la structure mécanique de la nacelle à celle du dirigeable.

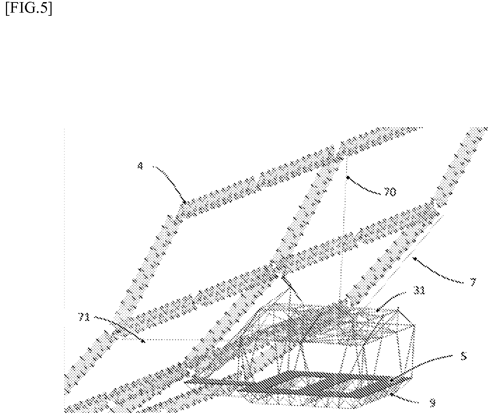

Dans un exemple particulier de réalisation d'une structure mécanique de nacelle illustré par les figures 4 et 5, la structure mécanique 300, réalisée par assemblage en treillis de tubes en matériau composite, comprend une partie de liaison 30 fixée à ses deux extrémités respectivement supérieure et inférieure par respectivement une interface de liaison mécanique 3 de type « fail safe » et une articulation 34 à des poutres en treillis structurelles longitudinales 44,42 dont des extrémités sont reliées à des poutres en treillis périphériques 41,44 dans la structure du corps principal du dirigeable.

Cette partie de liaison 30 est reliée rigidement d'une part à une partie supérieure 31 conçue pour porter en suspension deux turbogénérateurs et leurs équipements auxiliaires, et d'autre part à une partie inférieure 9 prévue pour recevoir un plancher 5 permettant à un opérateur d'accéder depuis l'intérieur du dirigeable auprès des turbogénérateurs à des fins de maintenance. Des pièces de structure mécanique 6 sont disposées entre la partie supérieure 31 et la partie inférieure afin de rigidifier la structure mécanique 300 de la nacelle. La structure mécanique est en outre reliée à la structure mécanique 4 du corps principal du dirigeable au moyen de trois câbles ou tiges 7,70,71 faisant fonction de hauban, chacun de ces câbles ou tiges ayant une première extrémité inférieure fixée en un point de la partie supérieure de la structure de nacelle 300 et une seconde extrémité supérieure fixée en un point de la structure mécanique 4 du corps principal du dirigeable.

En cas d'une poussée violente vers le bas subie par la nacelle menant à la rupture du câble de rétention principal ou de débris sectionnant ce câble principal, l'interface de liaison « fail safe » 3 remplit sa fonction et commute mécaniquement en mode « safe », ce qui évite une dégradation de la structure mécanique du dirigeable. La nacelle se trouve alors retenue par les câbles de hauban 7,70,71, ce qui évite la perte de cette nacelle.

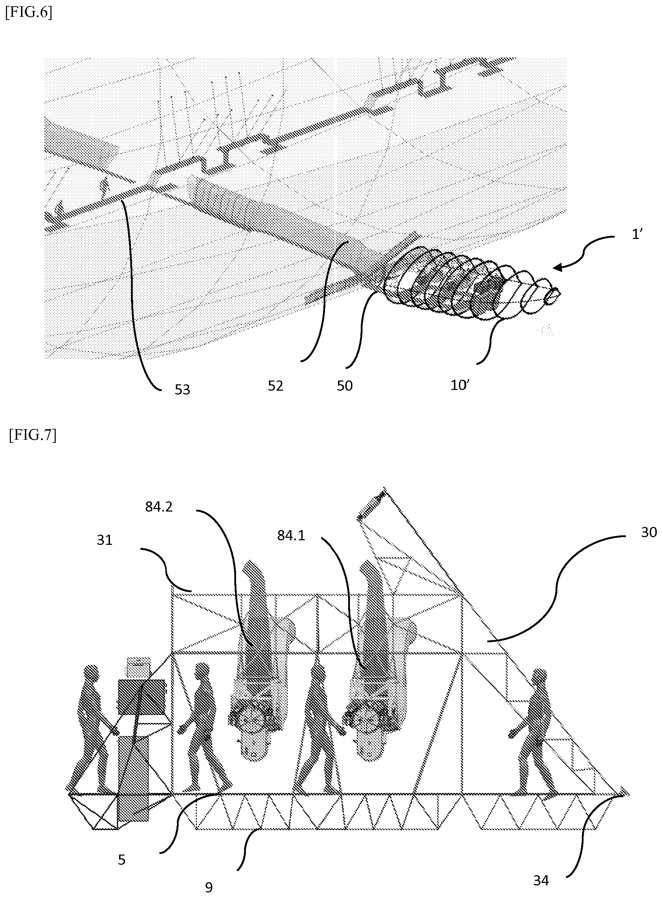

L'accès d'un opérateur dans une nacelle 1' depuis l'intérieur du dirigeable est rendu possible grâce à un chemin 52 transversal reliant les deux nacelles équipant le dirigeable et un chemin 53 dans l'axe principal du dirigeable, en référence à la figure 6. Ce chemin transversal rejoint le chemin d'accès 50 dans la continuité du plancher 5 de la nacelle pourvue d'une enveloppe souple 10' portée par des arceaux.

En référence à la figure 7, un opérateur, entrant au niveau de la partie de liaison 30 de la structure de nacelle, peut circuler à l'intérieur de la nacelle pour accéder aux deux turbogénérateurs 84.1,84.2 suspendus à la partie supérieure 31, en se déplaçant sur le plancher 5 disposé sur la partie inférieure 9. Il peut aussi accéder aux équipements électriques de conversion d'énergie et aux systèmes de batterie.

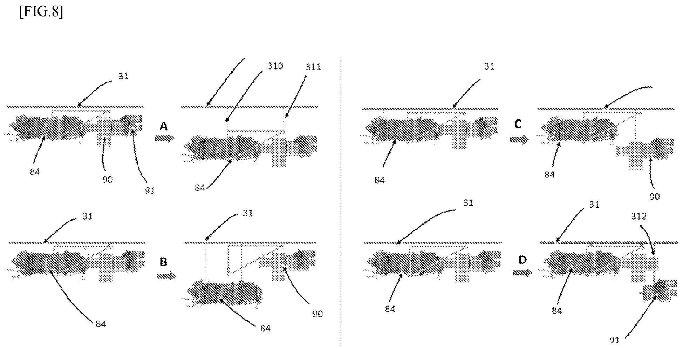

Il est possible pour un opérateur maintenance de déposer tout ou partie des composants d'un turbogénérateur 84 suspendu à la partie supérieure 31 de la structure mécanique, comme l'illustre la figure 8.

Ainsi, dans une première configuration (A), l'opérateur peut déposer au moyen de câbles 310,311 commandés par des treuils (non représentés), un système turbogénérateur complet incluant sa boîte de transmission 90 et le générateur électrique 91, en ayant préalablement débranché l'ensemble des alimentations, conduits d'évacuation et connecteurs.

Dans une seconde configuration (B), l'opérateur peut ne déposer que la turbine 84, en laissant suspendus la boîte de transmission et le générateur.

Dans une troisième configuration (C), l'opérateur peut ne déposer que la boîte de transmission 90 et le générateur électrique.

Dans une quatrième configuration (D), l'opérateur peut ne déposer que le générateur électrique 91 en utilisant un câble de dépose 312.

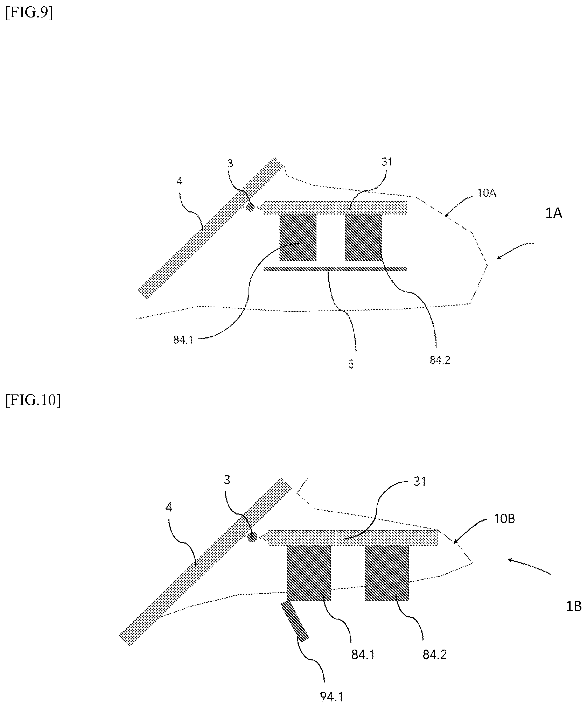

Il est possible de prévoir, dans un premier mode de réalisation, une nacelle 1A dont l'enveloppe 10A inclut entièrement les systèmes de génération électrique 84.1,84.2, par exemple des turbogénérateurs ou des piles à combustible, comme l'illustre la figure 9. Ces systèmes d'énergie électrique sont suspendus à la partie supérieure 31 de la structure mécanique de la nacelle 1A, cette partie supérieure étant reliée mécaniquement à la structure mécanique du dirigeable via l'interface de liaison mécanique 3. Dans ce mode de réalisation, il est nécessaire que l'enveloppe 10A soit pourvue sur sa partie inférieure d'une partie amovible permettant de libérer des ouvertures pour la dépose des systèmes d'énergie électrique.

Mais dans un autre mode de réalisation, on peut prévoir une nacelle 1B dont l'enveloppe 10B n'inclut que partiellement les systèmes de génération électrique 84.1,84.2, comme l'illustre la figure 10. Les parties inférieures des systèmes de génération électrique s'étendent alors vers le bas à l'extérieur de l'enveloppe 10B. Ces parties inférieures peuvent alors être pourvues de trappes ou volets d'accès 94.1 permettant à un opérateur d'accéder par le bas aux systèmes de génération électrique et de les extraire et déposer si nécessaire.

Bien sûr d'autres modes de réalisation d'une structure mécanique d'une nacelle selon l'invention peuvent être envisagés sans sortir du cadre de la présente invention. En particulier, on peut envisager d'autres géométries de l'enveloppe que celle qui vient d'être décrite.

## Revendications

1. Nacelle (1) pour un dirigeable comportant un corps principal ayant une structure rigide (4) entourant une pluralité de conteneurs d'un gaz plus léger que l'air et une pluralité de groupes propulseurs électrique alimentés à partir d'au moins une unité de génération d'énergie électrique, ladite nacelle (1) étant agencée pour recevoir une ou plusieurs desdites unités de génération d'énergie électrique (84.1,84.2) au sein d'une enveloppe de carénage (10), et comprend une structure mécanique (300) pouvant être reliée à la structure rigide (4) du corps principal, **caractérisée en ce que** ladite structure mécanique comportant une partie supérieure (31) agencée pour suspendre ladite ou lesdites unités de génération d'énergie électrique (84.1,84.2) et une partie inférieure (9) agencée pour permettre une extraction de ladite ou desdites unités de génération d'énergie électrique (84.1,84.2) hors de ladite nacelle (1).

2. Dirigeable (D) comportant un corps principal ayant une structure rigide (4) entourant une pluralité de conteneurs d'un gaz plus léger que l'air, une pluralité de groupes propulseurs reliés mécaniquement à cette structure rigide (4) et comportant chacun un ou plusieurs moteurs électriques d'entraînement d'une hélice propulsive, et une ou plusieurs unités de génération d'énergie électrique prévues pour alimenter ledit un ou plusieurs moteurs électriques,
**caractérisé en ce qu'**il comprend en outre deux nacelles selon la revendication 1, disposées symétriquement de part et d'autre du corps principal.

3. Dirigeable selon la revendication précédente, dans lequel l'enveloppe de carénage (10) d'au moins une nacelle comprend dans sa partie inférieure au moins une partie amovible.

4. Dirigeable selon l'une des deux revendications précédentes, dans lequel la partie inférieure (9) de la structure de nacelle (300) comporte un plancher (5) entourant la ou les unités de génération électrique (84.1,84.2) installées dans la nacelle (1) et un chemin (50) communicant avec le corps principal du dirigeable, ledit plancher (5) étant configuré pour permettre de descendre tout ou partie d'une unité de génération d'énergie électrique (84.1,84.2) hors de la nacelle (1).

5. Dirigeable selon l'une quelconque des trois revendications précédentes, dans lequel au moins une nacelle comprend en outre au moins un capotage d'une unité de génération d'énergie électrique, ce capotage s'étendant vers le bas à l'extérieur de l'enveloppe de carénage et comportant un volet d'accès à l'unité de génération d'énergie électrique.

6. Dirigeable selon l'une quelconque des quatre revendications précédentes, dans lequel la ou les unités de génération d'énergie électrique comprennent au moins un turbogénérateur.

7. Dirigeable selon l'une quelconque des cinq revendications précédentes, dans lequel la ou les unités de génération d'énergie électrique comprennent au moins un système de pile à combustible.

## Patentansprüche

1. Gondel (1) für ein Luftschiff mit einem Hauptkörper, der eine starre Struktur (4) aufweist, die eine Vielzahl von Behältern eines Gases, das leichter als Luft ist, und eine Vielzahl von elektrischen Antriebsgruppen umgibt, die aus mindestens einer Elektroenergieerzeugungseinheit gespeist werden, wobei die Gondel (1) zum Aufnehmen eine oder mehrere der Elektroenergieerzeugungseinheiten (84.1,84.2) innerhalb einer Verkleidungshülle (10) eingerichtet ist, und eine mechanische Struktur (300) umfasst, die mit der starren Struktur (4) des Hauptkörpers verbunden werden kann, **dadurch gekennzeichnet, dass** die mechanische Struktur einen oberen Teil (31), der zum Aufhängen der einen oder der mehreren Elektroenergieerzeugungseinheiten (84.1,84.2) eingerichtet ist, und einen unteren Teil (9) vorweist, der zum Ermöglichen einer Entnahme der einen oder der mehreren Elektroenergieerzeugungseinheiten (84.1,84.2) aus der Gondel (1) eingerichtet ist.

2. Luftschiff (D) mit einem Hauptkörper, der eine starre Struktur (4), die eine Vielzahl von Behältern eines Gases umgibt, das leichter als Luft ist, eine Vielzahl von Antriebsgruppen, die mechanisch mit dieser starren Struktur (4) verbunden sind und jeweils einen oder mehrere elektrische Motoren zum Antrieb einer Antriebsschraube vorweisen, und eine oder mehrere Elektroenergieerzeugungseinheiten, die zum Speisen des einen oder der mehreren elektrischen Motoren vorgesehen sind, aufweist, **gekennzeichnet dadurch, dass** es ferner zwei Gondeln nach Anspruch 1 umfasst, die beiderseits des Hauptkörpers symmetrisch angeordnet sind.

3. Luftschiff nach dem vorstehenden Anspruch, wobei die Verkleidungshülle (10) mindestens einer Gondel in ihrem unteren Teil mindestens einen abnehmbaren Teil umfasst.

4. Luftschiff nach einem der zwei vorstehenden Ansprüche, wobei der untere Teil (9) der Gondelstruktur (300) einen Boden (5) vorweist, der die in der Gondel (1) installierten Elektroenergieerzeugungseinheiten (84.1,84.2) umgibt, und einen Weg (50), der mit dem Hauptkörper des Luftschiffs in Verbindung steht, wobei der Boden (5) zum Ermöglichen des Herablassens, ganz oder teilweise, einer Elektroenergieerzeugungseinheit (84.1,84.2) aus der Gondel (1) konfiguriert ist.

5. Luftschiff nach einem der drei vorstehenden Ansprüche, wobei mindestens eine Gondel ferner mindestens eine Verkleidung einer Elektroenergieerzeugungseinheit umfasst, wobei sich diese Verkleidung nach unten außerhalb der Verkleidungshülle erstreckt und eine Zugangsklappe zu der elektrischen Energieerzeugungseinheit vorweist.

6. Luftschiff nach einem der vier vorstehenden Ansprüche, wobei die eine oder die mehreren Elektroenergieerzeugungseinheiten mindestens einen Turbogenerator umfassen.

7. Luftschiff nach einem der fünf vorstehenden Ansprüche, wobei die eine oder die mehreren Elektroenergieerzeugungseinheiten mindestens ein Brennstoffzellsystem umfassen.

## Claims

1. Nacelle (1) for an airship having a main body with a rigid structure (4) surrounding a plurality of containers for a lighter-than-air gas and a plurality of electric propeller units supplied from at least one electric-power-generating unit, said nacelle (1) being arranged to receive one or more of said electric-power-generating units (84.1,84.2) within a fairing envelope (10), and comprising a mechanical structure (300) connectable to the rigid structure (4) of the main body, **characterized in that** said mechanical structure has an upper part (31) arranged to suspend said electric-power-generating unit or units (84.1,84.2) and a lower part (9) arranged to allow said electric-power-generating unit or units (84.1,84.2) to be extracted from said nacelle (1).

2. Airship (D) having a main body with a rigid structure (4) surrounding a plurality of containers for a lighter-than-air gas, a plurality of propeller units mechanically connected to said rigid structure (4) and each having one or more electric motors for driving a pusher propeller, and one or more electric-power-generating units intended to supply said one or more electric motors, **characterized in that** it further comprises two nacelles according to claim 1 arranged symmetrically on either side of the main body.

3. Airship according to the preceding claim, wherein the fairing envelope (10) of at least one nacelle comprises in its lower part at least one removable part.

4. Airship according to either of the two preceding claims, wherein the lower part (9) of the nacelle structure (300) has a floor (5) surrounding the electric generating unit or units (84.1,84.2) installed in the nacelle (1) and a path (50) communicating with the main body of the airship, said floor (5) being configured to allow all or part of an electric-power-generating unit (84.1,84.2) to be lowered out of the nacelle (1).

5. Airship according to any of the three preceding claims, wherein at least one nacelle further comprises at least one cowling for an electric-power-generating unit, this cowling extending downward outside the fairing envelope and having a flap for access to the electric-power-generating unit.

6. Airship according to any of the four preceding claims, wherein the electric-power-generating unit or units comprise at least one turbogenerator.

7. Airship according to any of the five preceding claims, wherein the electric-power-generating unit or units comprise at least one fuel cell system.
